Europäisches Patentamt

European Patent Office

Office européen des brevets

(19)

(11) EP 0 742 763 B1

(12) **EUROPÄISCHE PATENTSCHRIFT**

(45) Veröffentlichungstag und Bekanntmachung des Hinweises auf die Patenterteilung:
08.04.1998 Patentblatt 1998/15

(21) Anmeldenummer: 95905557.5

(22) Anmeldetag: 24.01.1995

(51) Int. Cl.⁶: **B60S 1/08**

(86) Internationale Anmeldenummer:
PCT/DE95/00082

(87) Internationale Veröffentlichungsnummer:
WO 95/21078 (10.08.1995 Gazette 1995/34)

(54) **VORRICHTUNG ZUM BETREIBEN EINES SCHEIBENWISCHERS IM INTERVALL- UND DAUERBETRIEB**

DEVICE FOR OPERATING A WINDSCREEN WIPER IN INTERMITTENT AND CONTINUOUS MODES

DISPOSITIF DE MISE EN FONCTIONNEMENT D'UN ESSUIE-GLACE EN MODE INTERMITTENT ET EN MODE CONTINU

(84) Benannte Vertragsstaaten:
DE ES FR GB IT SE

(30) Priorität: 05.02.1994 DE 4403661

(43) Veröffentlichungstag der Anmeldung:
20.11.1996 Patentblatt 1996/47

(73) Patentinhaber: ROBERT BOSCH GMBH
70442 Stuttgart (DE)

(72) Erfinder:
• PIENTKA, Rainer
D-77855 Achern (DE)
• BLITZKE, Henry
D-77815 Buehl (DE)

(56) Entgegenhaltungen:
EP-A- 0 438 633          EP-A- 0 443 080
EP-A- 0 545 806          FR-A- 2 663 276

• PATENT ABSTRACTS OF JAPAN vol. 014 no. 247 (M-0978) ,25.Mai 1990 & JP,A,02 068249 (HONDA MOTOR CO LTD ET AL) 7.März 1990,
• PATENT ABSTRACTS OF JAPAN vol. 012 no. 302 (M-732) ,17.August 1988 & JP,A,63 078849 (FUJITSU TEN LTD ET AL) 8.April 1988,

**Beschreibung**

STAND DER TECHNIK

Die Erfindung betrifft eine Vorrichtung zum Betreiben eines Scheibenwischers im Intervall- und Dauerbetrieb nach der Gattung des Hauptanspruchs.

Beispielsweise bei ständig wechselnder Regendichte ist es vor allem für den Fahrer eines Kraftfahrzeugs lästig und umständlich, immer wieder eine Umschalteinrichtung zu betätigen, um den Scheibenwischerbetrieb an die aktuelle Regendichte anzupassen. Es wurde daher bereits in der DE 40 18 903 C2 eine automatische Umschalteinrichtung vorgeschlagen, bei der das Intervall zwischen aufeinanderfolgenden Wischvorgängen in Abhängigkeit von der Anzahl der vom Sensor abgegebenen Signale beeinflußt wird, beispielsweise bezogen auf die Signale, die innerhalb eines vorgegebenen Zeitabschnitts auftreten. Oberhalb einer bestimm - ten Anzahl von Signalenl wird auf Dauerbetrieb des Scheibenwischers umgeschaltet.

Es erfolgt also keine direkte Umschaltung zwischen Intervallbetrieb und Dauerbetrieb, sondern eine indirekte Umschaltung über die Steuerung des Intervalls zwischen den verschiedenen Wischvorgängen. Dies führt zu einer relativ aufwendigen Steuerung und zu einer relativ unexakten Umschaltung zwischen Intervallbetrieb und Dauerbetrieb. Ein weiteres Problem besteht noch darin, daß im Dauerbetrieb keine berechnete "Intervallzeit" vorliegt, die als Kriterium für den Übergang Dauerbetrieb/Intervallbetrieb herangezogen werden kann.

VORTEILE DER ERFINDUNG

Die erfindungsgemäße Vorrichtung mit den kennzeichnenden Merkmalen hat den Vorteil, daß die Regendichte sehr exakt erfaßt wird und eine einfache und präzise Auswerteeinrichtung sowie Umschalteinrichtung zwischen Intervall- und Dauerbetrieb realisierbar sind.

Durch die in den Unteransprüchen aufgeführten Maßnahmen sind vorteilhafte Weiterbildungen und Verbesserungen der im Anspruch 1 angegebenen Vorrichtung möglich.

Die zur Bildung von Steuersignalen vorgesehenen Wischintervalle sind vorzugsweise Wischperioden, so daß zum einen die Regendichte über einen relativ großen Zeitraum erfaßt wird, und zum anderen die Synchronisationssignale für derartige Wischperioden ohnehin in Form von Steuersignalen für die Motorsteuerung vorliegen.

In vorteilhafter Weise werden durch Wasser bewirkte Signaleinbrüche des Sensorausgangssignals als Sensorsignale für die weitere Auswertung verwendet. Derartige Signaleinbrüche könne durch auftreffende Regentropfen, durch das über die Sensorfläche streichende feuchte Wischerblatt oder durch sich schnell verändernde Oberflächen-Strukturen, z. B. sehr starke Schlierenbildung, entstehen.

Bei größerer Regendichte sind die einzelnen Signaleinbrüche nicht mehr deutlich ausgeprägt, jedoch wird durch die große Zahl dieser Einbrüche das Sensorausgangssignal im wesentlichen kontinuierlich geschwächt. Zur Bildung des Steuersignals bei größerer Regendichte sind daher Mittel zur Erfassung des Absinkens des Sensorausgangssignals vorgesehen, durch die insbesondere das absinkende Sensorausgangssignal in kleine Zeitintervalle aufgeteilt wird, wobei jeweils der Signalabfall während eines solchen kleinen Zeitintervalls als wenigstens ein Signaleinbruch gewertet wird.

Zur Erfassung des Sensorsignals pro Auswertungs-Intervall ist zweckmäßigerweise eine Zähleinrichtung vorgesehen.

Die Zahl der Signaleinbrüche pro Wischperiode kann erheblich schwanken. Um nun einen ständigen Wechsel zwischen Dauer- und Intervallbetrieb zu verhindern, besitzt die Auswerteeinrichtung eine Vorrichtung zur Mittelwertbildung aus einer festlegbaren Anzahl von aufeinanderfolgenden Steuersignalen, wobei die Mittelwerte die effektiven Steuersignale bilden. Die Mittelwertbildung erfolgt zweckmäßigerweise nach jedem Wischintervall, beispielsweise wird ein Mittelwert über die vorangegangenen fünf Wischintervalle gebildet.

Damit die Auswerteeinrichtung jedoch nicht zu träge auf Veränderungen der Regendichte reagiert, ist jedes der Steuersignale aus vorangegangenen Wischintervallen bei der Mittelwertbildung mit vorgebbaren Gewichtungsfaktoren verknüpft, wobei weiter zurückliegende Wischperioden zweckmäßigerweise schwächer bewertet werden.

Eine weitere vorteil hafte Maßnahme zur Verhinderung eines ständigen Wechsels zwischen Dauer- und Intervallbetrieb besteht darin, daß zwei Schwellwerte zur Bildung einer Umschalthysterese für die Umschaltung zwischen Intervall- und Dauerbetrieb vorgesehen sind. Dabei können auch in einer noch komfortableren Ausführung wenigstens zum Teil unterschiedliche Gewichtsfaktoren zur Bildung eines ersten effektiven Steuersignals für den Übergang von Dauerbetrieb zu Intervallbetrieb und eines zweiten effektiven Steuersignals für den Übergang von Intervallbetrieb zu Dauerbetrieb vorgesehen sein. Diese Maßnahmen sollen einen schnellen Übergang in den Dauerbetrieb und ein Verweilen in dieser Betriebsart gewährleisten, wenn es die Regensituation erfordert.

Häufig sind bei Scheibenwischern verschiedene Dauerbetriebszustände mit unterschiedlicher Wischgeschwindigkeit vorgesehen. Die Erfindung kann sich auch auf die Umschaltung zwischen solchen verschiedenen Dauerbetriebszuständen erstrecken, wobei wenigstens ein weiterer Schwellwert zur Umschaltung zwischen einem ersten Dauerbetrieb und einem zweiten Dauerbetrieb mit höherer Wischgeschwindigkeit vorgesehen ist. Vorteilhafter ist es, zwei weitere Schwellwerte zur Bildung einer Umschalthysterese für die Umschaltung zwischen dem ersten und zweiten Dauerbetrieb vorzusehen.

Eine weitere Verfeinerung kann noch dadurch erreicht werden, daß Mittel zur Bewertung der Tiefe der Signaleinbrüche vorgesehen sind. Die Tiefe dieser Signaleinbrüche kann zweckmäßigerweise als Gewichtsfaktor für die Steuersignale vorgesehen sein.

ZEICHNUNG

Ein Ausführungsbeispiel der Erfindung ist in der Zeichnung dargestellt und in der nachfolgenden Beschreibung näher erläutert. Es zeigen:

Fig. 1     ein Blockschaltbild eines Ausführungsbeispiels der Erfindung,

Fig. 2     ein Signaldiagramm zur Erläuterung der Zusammenhänge zwischen Regenintensität RI, erfaßten Einbrüchen pro Wischperiode und Umschaltvorgängen zwischen Betriebszuständen,

Fig. 3     ein Signaldiagramm zur Erläuterung der Verhältnisse bei geringer Regenintensität,

Fig. 4     ein Signaldiagramm zur Erläuterung der Verhältnisse bei mittlerer Regenintensität,

Fig. 5     ein Signaldiagramm zur Erläuterung der Verhältnisse bei hoher Regenintensität und

Fig. 6     ein Signaldiagramm zur Erläuterung der gewichteten Mittelwertsbildung.

BESCHREIBUNG DES AUSFÜHRUNGSBEISPIELS

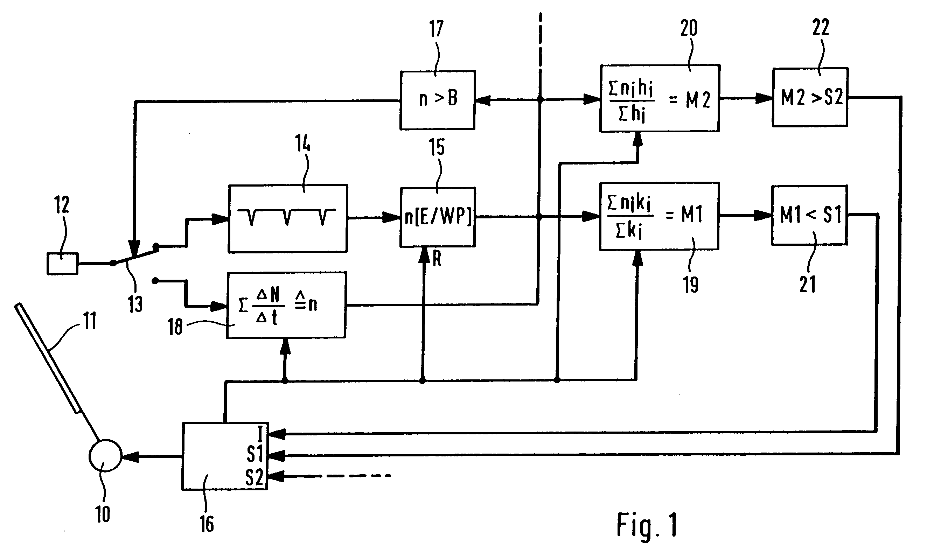

Gemäß dem in Fig. 1 dargestellten Ausführungsbeispiel bewegt sich ein in üblicher Weise von einem Wischermotor 10 angetriebener Scheibenwischer 11 über eine nicht dargestellte Scheibe, beispielsweise die Windschutzscheibe oder Heckscheibe eines Kraftfahrzeugs. An dieser Scheibe ist ein Regensensor 12 angeordnet, wie er beispielsweise aus der DE-PS 23 54 100 oder der DE 41 02 146 A1 bekannt ist. Bei derartigen Regensensoren wird beispielsweise das von einer Lichtquelle ausgesandte Licht an der Scheibenaußenseite reflektiert und von einer Lichtmeßeinrichtung erfaßt. Schmutzpartikel oder Regentropfen an der Scheibe schwächen die Reflexion, was zu einer Signalschwächung in der Lichtmeßeinrichtung führt.

Das Ausgangssignal des Regensensors 12 wird über eine Umschalteinrichtung 13 in der dargestellten Schallstellung einer ersten Auswerteeinrichtung 14 zugeführt, in der Signaleinbrüche des Regensensors 12 in Zählsignale für eine nachgeschaltete Zähleinrichtung 15 umgewandelt werden. Diese Signaleinbrüche sind ein Maß für die Regenintensität RI und haben unter anderem folgende Ursachen:

1. Auftreffende Regentropfen, wobei die Tiefe des Einbruchs ein grobes Maß für die Tropfengröße ist,

2. Einbrüche, verursacht durch das über die Sensorfläche streichende (feuchte) Wischerblatt und

3. sich schnell verändernde Oberflächen-Strukturen (z. B. sehr starke Schlierenbildung).

Dabei wird jeder Signaleinbruch ab einer Mindesttiefe als Zählsignal für die Zähleinrichtung 15 aufbereitet. Diese Zähleinrichtung 15 wird durch eine elektronische Steuereinrichtung 16 für den Wischermotor 10 synchronisiert, das heißt, zu Beginn jeder Wischperiode wird die Zähleinrichtung 15 rückgesetzt, so daß am Ende jeder Zählperiode in der Zähleinrichtung 15 ein Zahlenwert vorliegt, der der Zahl n von Einbrüchen E pro Wischperiode WP entspricht. Dieser Zahlwert N wird als Steuerwert N weiterverwendet.

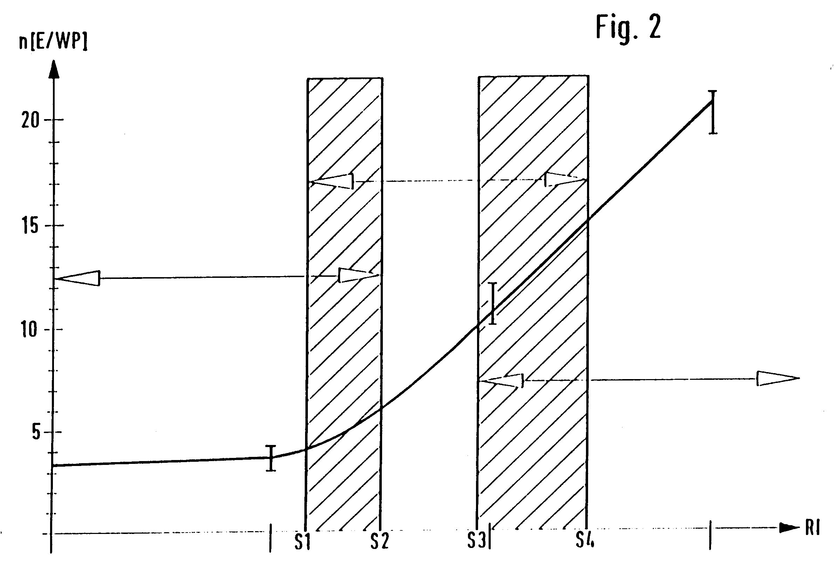

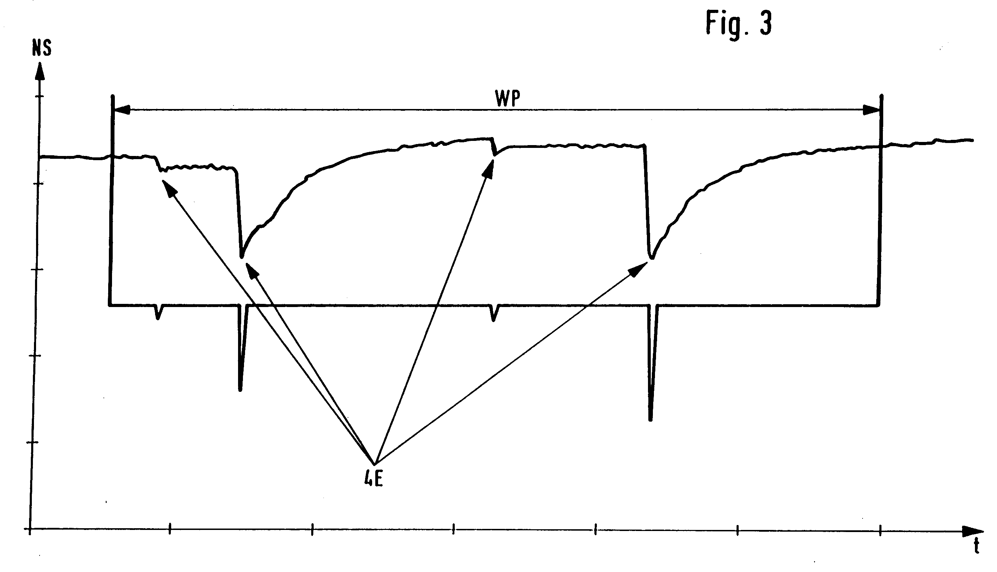

In den Fig. 3 bis 5 sind die Verhältnisse bei geringer, mittlerer und großer Regenintensität RI dargestellt. Bei geringer Regenintensität gemäß Fig. 3 werden während einer Wischperiode WP vier Einbrüche des Nutzsignals NS des Regensensors 12 registriert. Die beiden kleineren Einbrüche sind durch Regentropfen bewirkt, während die beiden großen Einbrüche durch den Wischer verursacht werden, der über den Regensensor 12 streicht. Der relativ langsame Signalanstieg nach den beiden Wischerdurchgängen wird durch abdampfende Schlieren verursacht. Bei diesen Verhältnissen liegt gemäß Fig. 2 der Intervallbetrieb vor.

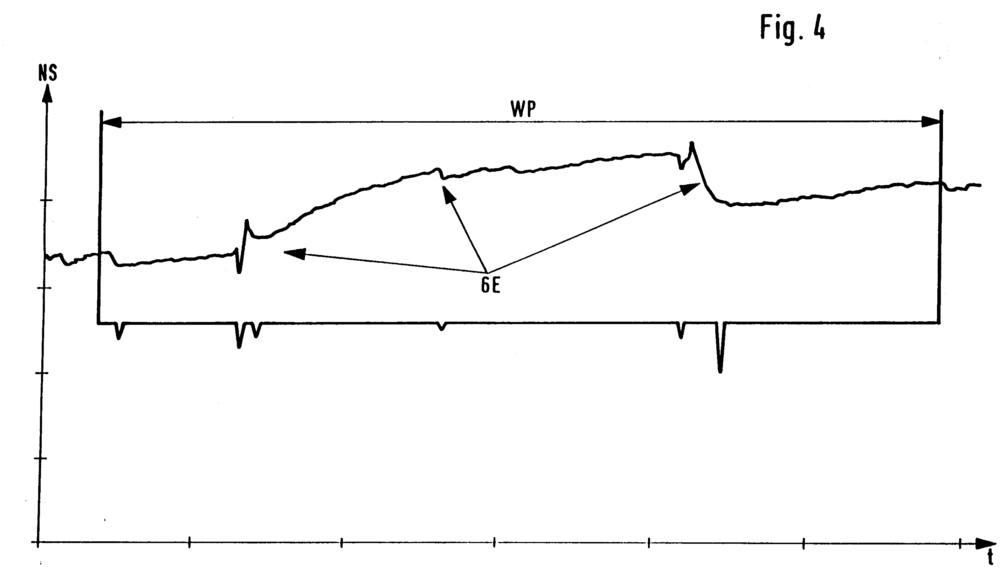

In Fig. 4 sind die Verhältnisse bei mittlerer Regenintensität dargestellt, und es werden sechs Einbrüche während einer Wischperiode WP registriert. Bis zu dieser Regenintensität kann gemäß Fig. 2 Intervallbetrieb oder Dauerbetrieb Stufe 1 vorliegen, wobei dieser Bereich zwischen vier und sechs Einbrüchen pro Wischperiode als linker schraffierter Bereich dargestellt ist.

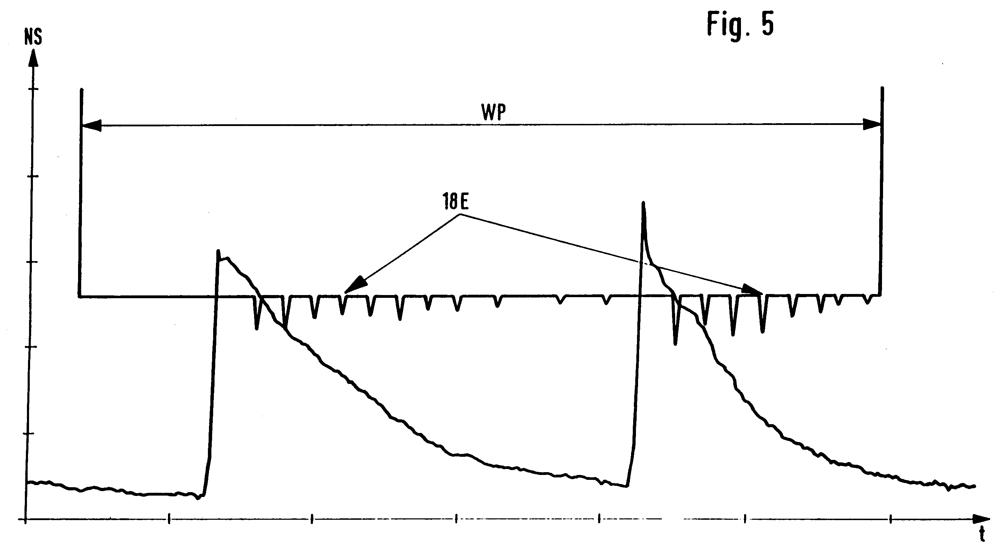

Fig. 5 zeigt die Verhältnisse bei großer Regenintensität, und es werden achtzehn Einbrüche pro Wischperiode registriert. Während des zweimaligen Überstreichens des Sensors durch den Wischer erholt sich das Nutzsignal NS des Regensensors kurzzeitig (steiler Anstieg), um dann durch auftreffenden Regen sofort wieder geschwächt zu werden. Bei dieser Regendichte wird das Signal kontinuierlich geschwächt, und die einzelnen Einbrüche sind kaum noch erkennbar. In einer Schaltstufe 17 wird die hohe Regenintensität erkannt, und es wird ein Ausgangssignal erzeugt, wenn beispielsweise die Zahl n von Einbrüchen pro Wischperiode größer als neun ist. Dann erfolgt mittels dieser Schaltstufe 17 eine Umschaltung der Umschalteinrichtung 13, und das Nutzsignal des Regensensors 12 wird jetzt einer zweiten Auswerteeinrichtung 18 zugeführt. Dort wird das Signal in kleine Zeitabschnitte $\Delta t$ zerlegt, und die Signalabnahme $\Delta N$ im jeweiligen Zeitintervall $\Delta t$ wird als Einbruch gezählt. Die Steilheit der Signalschwächung ist dabei eine Funktion für die sich ergebende Zahl von Einbrüchen. Diese werden in der zweiten Auswerteeinrichtung 18 pro Wischintervall aufsummiert, wobei eine derartige Aufsummierung prinzipiell auch in der Zähleinrichtung 15 erfolgen könnte. Bei dieser hohen Regenintensität liegt immer der Dauerbetrieb vor, gemäß Fig. 2 sogar ein Dauerbetrieb in der Stufe 2, also bei höherer Wischgeschwindigkeit gegenüber der Stufe 1.

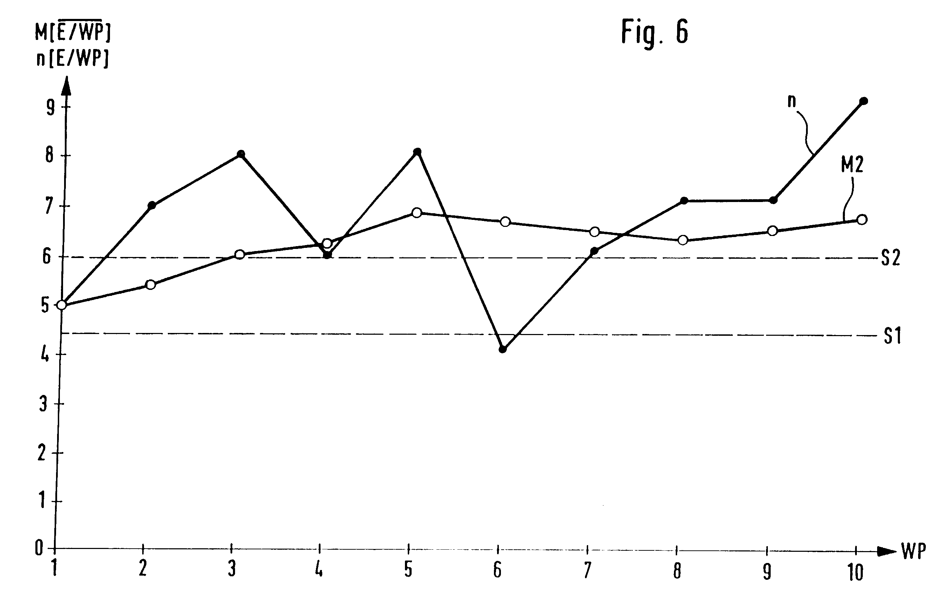

Die Steuersignale n werden nun zwei Stufen 19, 20 zur Mittelwertbildung zugeführt. Die Zahl der Einbrüche pro Wischperiode kann nämlich gemäß Fig. 6 (Kurve n mit ausgefüllten Vierecken als Meßpunkte) erheblich schwanken. Dies liegt unter anderem an dem zufälligen zeitlichen Auftreffen von Regentropfen auf der Meßstrecke und den wechselnden Regenbedingungen, z. B. starker Wind, der unterschiedliche Wassermengen auf die Scheibe bringt, oder Spritzwasser von vorausfahrenden Fahrzeugen. Um einen ständigen Wechsel zwischen Dauer- und Intervallbetrieb zu verhindern, wird das gewogene arithmetische Mittel M1 bzw. M2 einer Anzahl i von Steuersignalen n aus vorangegangenen Wischperioden gebildet:

$$M1 = \frac{\Sigma n_i \cdot k_i}{\Sigma k_1} \quad M2 = \frac{\Sigma n_i \cdot h_i}{\Sigma h_i}$$

$$i = 1 ....5$$

Mit dem Gewichtungsfaktor k bzw. h wird erreicht, daß Steuersignale aus weiter zurückliegenden Wischperioden anders bewertet werden können, beispielsweise geringer bewertet werden. Dabei werden beispielsweise i = 5 vorausgegangene Wischperioden berücksichtigt.

Fig. 6 zeigt die Steuersignale N über zehn Wischperioden und entsprechend gebildete Mittelwerte M2, jeweils gebildet aus den Steuersignalen der jeweiligen letzten fünf Wischperioden. Die Bildung der Mittelwerte M1 bzw. M2 erfolgt wiederum synchronisiert mit der Steuerung der Wischperioden.

Die Mittelwerte M1 und M2 dienen als effektive Mittelwerte und werden jeweils zwei Schwellwertstufen 21, 22 zugeführt. Dabei dient der Mittelwert M1 als Steuersignal für die Umschaltung in Intervallbetrieb, die dann erfolgt, wenn ein niedrigerer Schwellwert S1 unterschritten wird. Die erste Schwellwertstufe 21 erzeugt dann ein Steuersignal für den Intervalleingang I der elektronischen Steuereinrichtung 16. Dagegen dient der Mittelwert M2 als Steuersignal für die Umschaltung in den Dauerbetrieb (Stufe 1), der dann erfolgt, wenn ein höherer Schwellwert S2 überschritten wird. In diesem Falle erzeugt die zweite Schwellwertstufe 22 ein Steuersignal für den Eingang S1 der elektronischen Steuereinrichtung 16 zur Umschaltung in den Dauerbetriebe (Stufe 1). Hierdurch wird eine Hysterese bei der Umschaltung erzielt, die ein ständiges Hin- und Herschalten zwischen den beiden Betriebszuständen wirksam verhindert.

Die Umschaltung zwischen den Stufen 1 und 2 des Dauerbetriebs erfolgt entsprechend. Hierzu werden in nicht dargestellter Weise zwei weitere Stufen zur Mittelwertbildung und zwei weitere Schwellwertstufen benötigt. Dies ist schematisch durch gestrichelte Linie dargestellt. Selbstverständlich können prinzipiell noch weitere Stufen vorgesehen sein.

Die unterschiedliche Gewichtung kann beispielsweise dadurch erfolgen, daß für den Übergang vom Intervall- in den Dauerbetrieb die Steuersignale der weiter zurückliegenden Wischperioden weniger gewichtet werden, während für den Übergang aus dem Dauerbetrieb in den Intervallbetrieb eine gleichmäßige Gewichtung angesetzt wird. In einer einfacheren Ausführung kann auch auf diese unterschiedliche Gewichtung verzichtet werden, so daß nur noch eine einzige Stufe zur Mittelwertbildung erforderlich ist. Diese einzige Stufe kann beispielsweise auch die Mittelwertbildung zur Erzeugung eines effektiven Steuersignals für den Übergang zwischen den verschiedenen Stufen des Dauerbetriebs bewirken. Weiterhin kann in einem einfacheren Ausführungsbeispiel unter Verzicht auf die Hysterese auch nur ein einziger Schwellwert für den Übergang zwischen Intervall- und Dauerbetrieb vorgesehen sein. Dasselbe gilt für den Übergang zwischen den verschiedenen Stufen des Dauerbetriebs.

Wenn beispielsweise auf eine zweite Stufe des Dauerbetriebs verzichtet wird, so ist für die Umschaltung zwischen dem Intervall- und dem Dauerbetrieb die erste Auswerteeinrichtung 14 ausreichend, und es kann auf die zweite Auswerteeinrichtung 18 verzichtet werden.

Andererseits kann in einer komfortableren Ausführung auch noch die Tiefe der Signaleinbrüche als zusätzliche Bewertung der Regensituation und als weitere Einflußgröße auf die Gewichtungsfaktoren H bzw. K herangezogen werden.

Die Einschaltung der elektronischen Steuereinrichtung 16 wenigstens in den Intervallbetrieb kann manuell erfolgen oder auch automatisch z. B. unmittelbar dann, wenn vom Regensensor 12 ein Regentropfen erfaßt wird.

Alternativ zu der in Fig. 1 angegebenen Anordnung können auch die beiden Auswerteeinrichtungen 14, 18 als einzige Auswerteeinrichtung ausgeführt werden. Die externe Umschalteinrichtung 13 und die externe Schaltstufe 17 können dann entfallen. Bei einem erkannten Signaleinbruch wird in dieser kombinierten Auswerteeinrichtung prinzipiell immer ein Zeitfenster gesetzt. Ab einer sich ergebenden Tiefe eines Signaleinbruchs, speziell im Fall einer kontinuierlichen Signalschwächung, wird der in Zeitfenster erkannte Signalabfall als ein Signaleinbruch gezählt.

**Patentansprüche**

1. Vorrichtung zum Betreiben eines Scheibenwischers im Intervall- und Dauerbetrieb, mit wenigstens einem Signale in Abhängigkeit vom Feuchtigkeitsbelag oder der Regenmenge auf einer zu reinigenden Scheibe abgebenden Sensor und mit einer elektronischen Steuereinrichtung zur Steuerung des Betriebs des Scheibenwischers in Abhängigkeit der Signale des Sensors, gekennzeichnet durch eine die Zahl der Sensorsignale (E) pro Wischintervall (WP) als Steuersignal erfassende Auswerteeinrichtung (14) und ein in Abhängigkeit des Über- und/oder Unterschreitens wenigstens eines Schwellwerts (S1, S2) durch das Steuersignal (n) oder eines von Steuersignalen abgeleiteten Signals (M1, M2) zwischen Intervall- und Dauerbetrieb umschaltende Umschalteinrichtung (21, 22).

2. Vorrichtung nach Anspruch 1, dadurch gekennzeichnet, daß die zur Bildung von Steuersignalen (n) vorgesehenen Wischintervalle (WP) Wischperioden sind.

3. Vorrichtung nach Anspruch 1 oder 2, dadurch gekennzeichnet, daß die zur Auswertung verwendeten Sensorsignale durch Wasser bewirkte Signaleinbrüche (E) des Sensorausgangssignals (NS) sind.

4. Vorrichtung nach einem der vorhergehenden Ansprüche, dadurch gekennzeichnet, daß zur Bildung des Steuersignals (n) bei größerer Regendichte Mittel (18) zur Erfassung des Absinkens des Sensorausgangssignals (NS) vorgesehen sind.

5. Vorrichtung nach Anspruch 4, dadurch gekennzeichnet, daß diese Mittel (18) zur Erzeugung von Zeitintervallen ($\Delta t$) ausgebildet sind, wobei jeweils der Signal abfall ($\Delta n$) während eines solchen Zeitintervalls ($\Delta t$) als wenigstens ein Signaleinbruch gewertet wird.

6. Vorrichtung nach einem der vorhergehenden Ansprüche, dadurch gekennzeichnet, daß eine Zähleinrichtung (15) zur Erfassung der Sensorsignale (E) pro Auswerungsintervall (WP) vorgesehen ist.

7. Vorrichtung nach einem der vorhergehenden Ansprüche, dadurch gekennzeichnet, daß die Auswerteeinrichtung (14) eine Vorrichtung (19,20) zur Mittelwertbildung aus einer festlegbaren Anzahl von aufeinanderfolgenden Steuersignalen (n) aufweist, wobei die Mittelwerte (M1, M2) die effektiven Steuersignale bilden.

8. Vorrichtung nach Anspruch 7, dadurch gekennzeichnet, daß die Vorrichtung (19, 20) zur Mittelwertbildung der Steuersignale nach jedem Wischintervall (WP) ausgebildet ist.

9. Vorrichtung nach Anspruch 7 oder 8, dadurch gekennzeichnet, daß jedes der Steuersignale (n) aus vorangegangenen Wischintervallen (WP) bei der Mittelwertbildung mit vorgebbaren Gewichtungsfaktoren ($h_i$, $k_i$) verknüpft ist.

10. Vorrichtung nach einem der vorhergehenden Ansprüche, dadurch gekennzeichnet, daß zwei Schwellwerte (S1, S2) zur Bildung eine Umschalthysterese für die Umschaltung zwischen Intervall- und Dauerbetrieb vorgesehen sind.

11. Vorrichtung nach Anspruch 9 und 10, dadurch gekennzeichnet, daß wenigens zum Teil unterschiedliche Gewichtungsfaktoren ($k_i$, $h_i$) zur Bildung eines ersten effektiven Steuersignals (M1) für den Übergang von Dauerbetrieb zu Intervallbetrieb und eines zweiten effektiven Steuersignals (M2) für den Übergang von Intervallbetrieb zu Dauerbetrieb vorgesehen sind.

12. Vorrichtung nach einem der vorhergehenden Ansprüche, dadurch gekennzeichnet, daß wenigstens ein weiterer Schwellwert (S3, S4) zur Umschaltung zwischen einem ersten Dauerbetrieb und einem zweiten Dauerbetrieb mit höherer Wischgeschwindigkeit vorgesehen ist.

13. Vorrichtung nach Anspruch 12, dadurch gekennzeichnet, daß zwei weitere Schwellwerte (S3, S4) zur Bildung einer Umschalthysterese für die Umschaltung zwischen dem ersten und zweiten Dauerbetrieb vorgesehen sind.

14. Vorrichtung nach einem der vorhergehenden Ansprüche, dadurch gekennzeichnet, daß Mittel zur Bewertung der Tiefe der Signaleinbrüche (E) vorgesehen sind.

15. Vorrichtung nach Anspruch 14, dadurch gekennzeichnet, daß die Tiefe der Signaleinbrüche (E) in Gewichtungsfaktoren für die Steuersignale (n) eingeht.

**Claims**

1. Device for operating a windscreen wiper in intermittent and continuous modes, having at least one sensor which emits signals as a function of the layer of moisture or the quantity of rain on a glass pane to be cleaned, and having an electronic control device for controlling the operation of the windscreen wiper as a function of the signals of the sensor, characterized by an evaluation apparatus (14) which senses the number of sensor signals (E) per wiping interval (WP) as a control signal and a switch-over apparatus (21, 22) which switches over between intermittent mode and continuous mode as a function of the control signal (n) or a signal (M1, M2) derived from control signals exceeding or dropping below at least one threshold value (S1, S2).

2. Device according to Claim 1, characterized in that the wiping intervals (WP) which are provided for forming control signals (n) or wiping periods.

3. Device according to Claim 1 or 2, characterized in that the sensor signals which are used for evaluation are signal dips (E) in the sensor output signal (NS) which are caused by water.

4. Device according to one of the preceding claims, characterized in that, in order to form the control signal (n) when there is relatively dense rain, means (18) for detecting the reduction in the sensor output signal (NS) are provided.

5. Device according to Claim 4, characterized in that these means (18) are designed to generate time intervals ($\Delta t$), the signal drop ($\Delta n$) during such a time interval ($\Delta t$) being evaluated in each case as at least one signal dip.

6. Device according to one of the preceding claims, characterized in that a counting apparatus (15) for sensing the sensor signals (E) per evaluation interval (WP) is provided.

7. Device according to one of the preceding claims, characterized in that the evaluation apparatus (14) has a device (19, 20) for forming mean values from a specifiable number of successive control signals (n), the mean values (M1, M2) forming the effective control signals.

8. Device according to Claim 7, characterized in that the device (19, 20) is designed for forming mean values of the control signals after each wiping interval (WP).

9. Device according to Claim 7 or 8, characterized in that, during the formation of mean values, each of the control signals (n) composed of proceeding wiping intervals (WP) is logically linked to prescribable weighting factors ($h_i$, $k_i$).

10. Device according to one of the preceding claims, characterized in that two threshold values (S1, S2) for forming a switch-over hysteresis for switching-over between intermittent mode and continuous mode are provided.

11. Device according to Claim 9 and 10, characterized in that weighting factors ($k_i$, $h_i$) are provided which are at least partially different, in order to form a first effective control signal (M1) for the change-over from continuous mode to intermittent mode and a second effective control signal (M2) for the change-over from intermittent mode to continuous mode.

12. Device according to one of the preceding claims, characterized in that at least one further threshold value (S3, S4) for switching over between a first continuous mode and a second continuous mode with a higher wiping speed is provided.

13. Device according to Claim 12, characterized in that two further threshold values (S3, S4) are provided for forming a switch-over hysteresis for switching over between the first and second continuous modes.

14. Device according to one of the preceding claims, characterized in that means for evaluating the depth of the signal dips (E) are provided.

15. Device according to Claim 14, characterized in that the depth of the signal dips (E) is included in weighting factors for the control signals (n).

**Revendications**

1. Dispositif de mise en oeuvre d'un essuie-glace en mode de fonctionnement intermittent et en mode de fonctionnement permanent, comprenant au moins un capteur fournissant des signaux en fonction de l'humidité occupant une vitre à nettoyer ou de la quantité de pluie déposée, ainsi qu'une installation de commande électronique pour commander le fonctionnement de l'essuie-glace selon les signaux du cap
teur, caractérisé par

   • une installation d'exploitation (14) détectant le nombre de signaux de capteur (E) par intervalle d'essuyage (WP) comme signal de commande et,
   • une installation de commutation (21, 22) qui commute entre le fonctionnement intermittent et le fonctionnement permanent, en fonction du dépassement vers le haut et/ou vers le bas d'au moins un seuil ($S_1$, $S_2$) par le signal de commande (n) ou un signal ($M_1$, $M_2$) déduit des signaux de commande.

2. Dispositif selon la revendication 1, caractérisé en ce que les intervalles d'essuyage (WP) prévus pour former les signaux de commande (n) sont les périodes d'essuyage.

3. Dispositif selon la revendication 1 ou 2, caractérisé en ce que les signaux de capteur utilisés pour l'exploitation sont les incursions de signal (E) du signal de sortie (NS) du capteur produites par l'eau.

4. Dispositif selon l'une des revendications précédentes,
caractérisé par
des moyens (18) détectant la diminution du signal de sortie (NS) du capteur pour former le signal de commande (n) pour de fortes densités de pluie.

5. Dispositif selon la revendication 4,
caractérisé en ce que
les moyens (18) sont réalisés pour générer des intervalles de temps ($\Delta t$), et chaque fois la chute de signal ($\Delta n$) pendant un tel intervalle de temps ($\Delta t$) est exploitée au moins comme une incursion de signal.

6. Dispositif selon l'une des revendications précédentes,
caractérisé par
une installation de comptage (15) pour détecter les signaux de capteur (E) par l'intervalle d'exploitation (WP).

7. Dispositif selon l'une des revendications précédentes,
caractérisé en ce que
le dispositif d'exploitation (14) comporte un dispositif (19, 20) formant la valeur moyenne d'un nombre fixé de signaux de commande (n) successifs, les valeurs moyennes ($M_1$, $M_2$) constituant les signaux de commande effectifs.

8. Dispositif selon la revendication 7,
caractérisé en ce que
le dispositif (19, 20) formant la valeur moyenne des signaux de commande est prévu pour chaque intervalle d'essuyage (WP).

9. Dispositif selon la revendication 7 ou 8,
caractérisé en ce que
chacun des signaux de commande (n) est combiné à partir des intervalles d'essuyage précédents (WP) pour former la valeur moyenne avec des coefficients de pondération prédéterminés ($h_j$; $k_i$).

10. Dispositif selon l'une des revendications précédentes,
caractérisé par,
deux seuils ($S_1$, $S_2$) pour former une hystérésis de commutation pour commuter entre le fonctionnement intermittent et le fonctionnement permanent.

11. Dispositif selon les revendications 9 et 10,
caractérisé en ce qu'
il y a des coefficients de pondération ($k_i$, $h_i$) au moins en partie différents pour former un premier signal de commande effectif ($M_1$) pour le passage du mode permanent en mode intermittent et d'un second signal de commande effectif ($M_2$) pour passer du mode intermittent en mode permanent.

12. Dispositif selon l'une des revendications précédentes,
caractérisé par
au moins un autre seuil ($S_3$, $S_4$) pour commuter entre un premier mode permanent et un second mode permanent de vitesse d'essuyage plus élevée.

13. Dispositif selon la revendication 12,
caractérisé par
deux autres seuils ($S_3$, $S_4$) pour réaliser une hystérésis de commutation pour commuter entre le premier et le second mode permanent.

14. Dispositif selon l'une des revendications précédentes,
caractérisé par
des moyens pour exploiter la profondeur des incursions des signaux (E).

15. Dispositif selon la revendication 14,
caractérisé en ce que
la profondeur des incursions de signaux (E) est intégrée dans les coefficients de pondération des signaux de commande (n).

Fig. 1

EP 0 742 763 B1

Fig. 2

Fig. 3

EP 0 742 763 B1

Fig. 4

NS

WP

6E

t

EP 0 742 763 B1

Fig. 5

EP 0 742 763 B1

Fig. 6